(19) Europäisches Patentamt
European Patent Office
Office européen des brevets

(11) EP 1 460 118 A2

(12) EUROPÄISCHE PATENTANMELDUNG

(43) Veröffentlichungstag:
**22.09.2004 Patentblatt 2004/39**

(51) Int Cl.[7]: **C09J 133/06**, C09J 11/04, C09J 7/04

(21) Anmeldenummer: **04004293.9**

(22) Anmeldetag: **26.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **18.03.2003 DE 10312062**

(71) Anmelder: **tesa AG**
**20253 Hamburg (DE)**

(72) Erfinder:
- **Husemann, Marc**
  **22605 Hamburg (DE)**
- **Zöllner, Stephan**
  **22043 Hamburg (DE)**

(54) **Schmelzhaftkleber mit geringem Rückschrumpf, Verfahren zu seiner Herstellung und Verwendung**

(57) Die Erfindung betrifft einen Schmelzhaftkleber, insbesondere einen Acrylatschmelzhaftkleber mit einem geringen Rückschrumpf nach Extrusionsbeschichtung, ein Verfahren zu seiner Herstellung sowie seine Verwendung zur Herstellung von Haftklebebändern.

Der erfindungsgemäße Schmelzhaftkleber umfasst mindestens eine Polyacrylatkomponente und einen Calciumcarbonat-haltigen Füllstoffzusatz, der vorzugsweise Kreide ist. Die mindestens eine Polyacrylatkomponente,

- basiert mit zumindest einem Massenanteil von 50 Gew.-% auf mindestens einem Acrylsäureester und/oder Methacrylsäureester der allgemeinen Formel (I)

$$CH_2 = CH(R_1)(COOR_2), \qquad (I)$$

  wobei $R_1$ = H oder $CH_3$ ist und $R_2$ ein unverzweigter, verzweigter, oder zyklischer Alkylrest mit 1 bis 22 C-Atomen ist, und
- ist im Wesentlichen frei von polaren Gruppen, insbesondere Carbonsäure- oder Hydroxygruppen.

EP 1 460 118 A2

## Beschreibung

Die Erfindung betrifft einen Schmelzhaftkleber, insbesondere Acrylatschmelzhaftkleber mit einem geringen Rückschrumpf nach Extrusionsbeschichtung, ein Verfahren zu seiner Herstellung sowie seine Verwendung zur Herstellung von Haftklebebändern.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse instabil machen. Ein weiterer Vorteil von Polyacrylaten ist ihre Einsatzfähigkeit in einem relativ weiten Temperaturbereich.

Polyacrylathaftklebemassen werden in der Regel in Lösung durch freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer üblicherweise vernetzt. Diese Härtung verläuft thermisch oder durch UV-Vernetzung oder durch ElektronenstrahlHärtung. Der beschriebene Prozess ist relativ kostenaufwendig und ökologisch bedenklich, da das Lösungsmittel in der Regel nicht recycelt wird und ein hoher Verbrauch an organischen Lösungsmitteln eine hohe Umweltbelastung bedeutet. Weiterhin ist es sehr schwierig, Haftklebebänder mit hohem Masseauftrag blasenfrei herzustellen.

Eine Verbesserung dieser Nachteile bedeutet der Heißschmelz-Prozess (Hotmelt-Prozess). Hier wird der Haftkleber in der Schmelze auf das Trägermaterial aufgetragen.

Mit dieser neuen Technik sind aber auch Einschränkungen verbunden. Vor der Beschichtung muss der Haftklebemasse das Lösungsmittel in einem Trocknungsextruder entzogen werden. Der Trocknungsprozess ist mit einer relativ hohen Temperatur und Schereinwirkung verbunden, so dass besonders hochmolekulare Polyacrylathaftklebemassen stark geschädigt werden. Die Acrylathaftklebemasse vergelt oder der niedermolekulare Anteil wird durch Molekulargewichtsabbau stark angereichert. Beide Effekte sind unerwünscht, da sie für die Anwendung nachteilig sind. Die Klebemasse lässt sich entweder nicht mehr beschichten oder die klebtechnischen Eigenschaften der Haftklebemasse verändern sich, da z. B. bei Einwirken einer Scherkraft auf die Klebmasse die niedermolekularen Anteile als Gleitmittel wirken und so zu einem vorzeitigen Versagen der Klebemasse führen.

Die verringerte Scherfestigkeit kann nur schwer kompensiert werden. Eine Möglichkeit besteht in der Anhebung der Polarität, beispielsweise durch erhöhte Anteile an Acrylsäure. Auf diesem Weg steigt zwar die Scherfestigkeit an, aber auch die Glasübergangstemperatur. Bei sehr hohen Mengen an Acrylsäure versprödet das Polymer und die Klebkraft und der Tack sinken deutlich ab.

Eine weitere Möglichkeit besteht in einer erhöhten Vernetzung des Schmelzhaftklebers. In diesem Fall wird die Masse stärker vernetzt (erhöhter Gelwert) und die Steifigkeit des Systems und damit auch die Scherfestigkeit nimmt zu. Nachteilig ist auch hier wiederum die bei hohen Vernetzungsgraden eintretende Verlackung.

Eine weitere Möglichkeit zur Steigerung der Kohäsion bietet der Zusatz von Füllstoffen, die wiederum durch Wechselwirkungen mit dem Schmelzhaftkleber die Kohäsion ansteigen lassen. In Analogie zur Problematik der ansteigenden Acrylsäureanteile im Polyacrylatschmelzhaftkleber sinkt auch in diesem Fall die Klebkraft deutlich ab.

Ein weiterer Nachteil von Acrylatschmelzhaftklebern ist die auftretende Orientierung nach der Extrusionsbeschichtung. Während der Beschichtung wird der Schmelzkleber durch eine Düse gepresst und anschließend mit dem Übertrag auf das Trägermaterial noch einmal gereckt. Auf diese Weise orientieren sich die Polymerketten, um dann sich auf dem Trägermaterial wieder in den ursprünglichen Zustand der Unordnung (thermodynamisches Grundprinzip der Entropiezunahme) zurückzubewegen. Dies äußert sich visuell in einem so genannten Rückschrumpf der Haftklebemasse, der zwar in einzelnen Fällen gewollt sein kann, aber im Vergleich zur konventionellen Lösungsmittelbeschichtung ungewöhnlich ist.

Die bereits genannten Maßnahmen zur Erhöhung der Polarität bzw. der Zusatz von Füllstoffen sind in diesem Fall ebenfalls kontraproduktiv, da durch die beschriebenen Wechselwirkungen sich auch die Orientierung verstärkt.

Es besteht somit der Bedarf für einen Acrylatschmelzhaftkleber, der die oben genannten Nachteile nicht aufweist, das heißt neben einer hohen Scherfestigkeit und einer hohen Klebkräfte auch auf unpolaren Oberflächen zudem einen nur sehr geringen Rückschrumpf nach der Extrusionsbeschichtung aufweist.

Gelöst wird diese Aufgabe durch einen Schmelzhaftkleber mit einer speziellen Zusammensetzung.

Der erfindungsgemäße Schmelzhaftkleber umfasst mindestens eine Polyacrylatkomponente und einen Calciumcarbonat-haltigen Füllstoffzusatz, der vorzugsweise Kreide ist. Die mindestens eine Polyacrylatkomponente,

- basiert mit zumindest einem Massenanteil von 50 Gew.-% auf mindestens einem Acrylsäureester und/oder Methacrylsäureester der allgemeinen Formel (I)

$$CH_2 = CH(R_1)(COOR_2), \quad (I)$$

wobei $R_1$ = H oder $CH_3$ ist und $R_2$ ein unverzweigter, verzweigter, oder cyklischer Alkylrest mit 1 bis 22 C-Atomen ist, und

■ ist im Wesentlichen frei von polaren Gruppen, insbesondere Carbonsäure- oder Hydroxygruppen.

Weitere Unteransprüche betreffen vorteilhafte Weiterentwicklungen.

Der erfindungsgemäße Schmelzhaftkleber weist einen Rückschrumpf nach Extrusionsbeschichtung (gemessen nach Testmethode A, Rückschrumpfmessung im freien Film, s.u.) von höchstens 5 %, insbesondere von höchstens 4 %, speziell von höchstens 3 %, auf.

Es hat sich insbesondere als vorteilhaft erwiesen, wenn die Polyacrylate der Polyacrylatkomponente eine mittlere Molmasse $M_W$ von höchstens 500.000 g/mol, insbesondere von höchstens 450.000 g/mol, besonders bevorzugt von höchstens 400.000 g/mol, aufweisen.

Ferner weist der Calciumcarbonat-haltige Füllstoffzusatz vorzugsweise einen auf die Polyacrylatkomponente bezogenen Massenanteil von mindestens 10 Gew.-%, insbesondere von mindestens 15 Gew.-%, auf. Bei diesen bevorzugten Anteilen verändern sich die klebtechnischen Eigenschaften (Scherfestigkeit bei RT, Sofortklebkraft auf Stahl und PE) durch den Füllstoffzusatz praktisch nicht. Es können hier verschiedene Kreideformen eingesetzt werden, wobei besonders bevorzugt Mikrosöhl-Kreide (Fa. Söhlde) eingesetzt wird.

Unter orientierte Haftklebemassen wird im Folgenden die Tendenz verstanden, sich nach einer Streckung in eine vorgegebene Richtung durch das so genannte entropieelastische Verhalten in den Ausgangszustand zurückzubewegen.

Die Monomere werden bevorzugt dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

In einer sehr bevorzugten Weise werden solche Acrylat- beziehungsweise Methacrylat-Momonere eingesetzt, die Acryl- oder Methacrylsäureester mit Alkylgruppen mit 4 bis 14 C-Atomen, vorzugsweise mit 4 bis 9 C-Atome umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z. B. Isobutylacrylat, 2-Ethylhexylacrylat, 2-Ethylhexylmethacrylat, Isooctylacrylat, Isooctylmethacrylat.

Weitere einsetzbare Verbindungsklassen sind (Meth)Acrylate mit überbrückten Cycloalkylresten mit mindestens 6 C-Atomen. Die Cycloalkylalkohole können auch substituiert sein, etwa durch $C_1$- bis $C_6$-Alkylgruppen, Halogenid- oder Cyanogruppen oder dergleichen. Spezifische Beispiele sind Cyclohexylmethacrylate, Isobornylacrylat, Isobornylmethacrylate und 3,5-Dimethyladamantylacrylat.

Nach einer besonders vorteilhaften Ausgestaltung der Erfindung basiert die mindestens eine Polyacrylatkomponente neben dem mindestens einem Acrylsäureester und/oder Methacrylsäureester auf mindestens einem Comonomer.

Als weitere Comonomere können insbesondere auch moderat basische Monomere einfach oder zweifach N-alkylsubstituierte Amide, insbesondere Acrylamide eingesetzt werden, beispielsweise N,N-Dimethylacrylamid, N,N-Dimethylmethacrylamid, N-tert-Butylacrylamid, N-Vinylpyrrolidon, N-Vinyllactam, Dimethylaminoethylacrylat, Dimethylaminoethylmethacrylat, Diethylaminoethylacrylat, Diethylaminoethylmethacrylat, N-Methylolacrylamid, N-Methylolmethacrylamid, N-(Butoxymethyl)methacrylamid, N-(Ethoxymethyl)acrylamid, N-Isopropylacrylamid, wobei diese Aufzählung nicht abschließend ist.

Weitere Beispiele für geeignete Comonomere sind Maleinsäureanhydrid, Itaconsäureanhydrid, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat und Tetrahydrofurfurylacrlyat, wobei diese Aufzählung nicht abschließend ist.

In einer weiteren sehr bevorzugten Vorgehensweise werden als Comonomere Vinylester, Vinylether, Vinylhalogenide, Vinylidenhalogenide, Vinylverbindungen mit aromatischen Cyclen und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden optional in einer weiteren Vorgehensweise Photoinitiatoren mit einer copolymerisierbaren Doppelbindung als Comonomer eingesetzt. Als Photoinitiatoren sind Norrish-I- und -II-Photoinitiatoren geeignet. Beispiele sind z. B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus

unter UV-Bestrahlung vernetzen können. Ein Überblick über mögliche einsetzbare Photoinitiatoren, die mit einer Doppelbindung funktionalisiert werden können, wird in Fouassier: "Photoinititation, Photopolymerization and Photocuring: Fundamentals and Applications", Hanser-Verlag, München 1995, gegeben.

Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, beispielsweise Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat, 4-Biphenylmethacrylat, 2-Naphthylacrylat, 2-Naphthylmethacrylat sowie Mischungen aus diesen Monomeren, wobei diese Aufzählung nicht abschließend ist.

Zur Weiterentwicklung können den erfinderischen Haftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze. Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Keimbildner, Blähmittel, Compoundierungsmittel und/oder Alterungsschutzmittel, z. B. in Form von primären und sekundären Antioxidantien oder in Form von Lichtschutzmitteln zugesetzt sein.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide.

Zu einer optionalen Vernetzung - wenn auch nicht zu bevorzugenden Vernetzung - mit UV-Licht können den Polyacrylathaftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

<u>Herstellverfahren für die erfinderischen Haftklebemassen</u>

Nach dem erfindungsgemäßen Verfahren zur Herstellung des Schmelzhaftklebers wird

(a) durch zumindest teilweise Polymerisation mindestens eines Acrylsäureesters und/oder Methacrylsäureesters der allgemeinen Formel $CH_2 = CH(R_1)(COOR_2)$ mit den oben genannten Bedeutungen, gegebenenfalls in Gegenwart mindestens eines Comonomers, mindestens eine Polyacrylatkomponente hergestellt und
(b) vor oder nach der Polymerisation ein Calciumcarbonat-haltiger Füllstoff zugemengt.

Zur Polymerisation werden die Monomere dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive

Technology" von Donatas Satas (van Nostrand, New York 1989) besitzen. Zur Erzielung einer bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, dass sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{W_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in Kelvin.

Zur Herstellung der Poly(meth)acrylat-Komponente werden vorteilhaft konventionelle radikalische Polymerisationen mit den Monomeren, gegebenenfalls in Gegenwart der Comonomere durchgeführt. Für die bevorzugt photoinitiiert radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist in Houben Weyl (Methoden der Organischen Chemie, Vol. E 19a, S. 60 - 147) beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Der $CaCO_3$-haltige Füllstoff, insbesondere Kreide, kann den Monomeren vor der Polymerisation und/oder nach Beendigung der Polymerisation beigemischt werden.

Die mittleren Molekulargewichte $M_W$ der bei der radikalischen Polymerisation entstehenden Haftklebemassen werden sehr bevorzugt derart gewählt, dass sie in einem Bereich $M_W$ von < 400.000 g/mol liegen. Die Bestimmung des mittleren Molekulargewichtes erfolgt über Größenausschlusschromatographie (GPC) oder Matrixunterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether) und Ether (z. B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essenziell. Die Polymerisation kann für die thermisch zerfallenden Initiatoren durch Erwärmen auf 50 bis 160°C, je nach Initiatortyp, initiiert werden.

Für die Herstellung kann es auch von Vorteil sein, die Acrylathaftklebemassen in Substanz zu polymerisieren. Hier eignet sich insbesondere, die Präpolymerisationstechnik einzusetzen. Die Polymerisation wird mit UV-Licht initiiert, aber nur bis zu einem geringen Umsatz von ca. 10 - 30 % geführt. Anschließend kann dieser Polymersirup z. B. in Folien eingeschweißt werden (im einfachsten Fall Eiswürfel) und dann in Wasser zu hohem Umsatz durchpolymerisiert werden. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermischleitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird in diesem Fall im Allgemeinen durch die Struktur $P_L(A)$-Me repräsentiert, wobei Me ein Metall der Gruppe I, wie z.B. Lithium, Natrium oder Kalium, und $P_L(A)$ ein wachsender Polymerblock ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Polyacrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

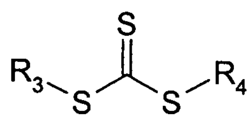
(II)

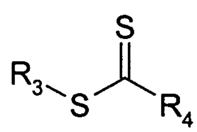
(III)

worin $R_3$ und $R_4$ unabhängig voneinander oder gleich sind gewählt aus der Gruppe

- verzweigte und unverzweigte $C_1$- bis $C_{18}$-Alkylreste; $C_3$- bis $C_{18}$-Alkenylreste; $C_3$bis $C_{18}$-Alkinylreste;
- $C_1$- bis $C_{18}$-Alkoxyreste;
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann;
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste;
- $C_6$-$C_{18}$- Aryl- oder Benzylreste;
- Wasserstoff.

Kontrollreagenzien des Typs (II) bestehen bevorzugt aus folgenden weiter eingeschränkten Verbindungen:

Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl. Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl. Beispiele für Alkinyl mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl oder Hydroxyhexyl. Beispiele für Halogen-substituierte Alkylreste sind Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispiels-

weise $-CH_2-CH_2-O-CH_2-CH_3$.

Als $C_3$-$C_{12}$-Cycloalkylreste dienen beispielsweise Cyclopropyl, Cyclopentyl, Cyclohexyl oder Trimethylcyclohexyl.

Als $C_6$-$C_{18}$-Arylreste dienen beispielsweise Phenyle, Naphthyl, Benzyl, 4-tert.-Butylbenzyl- oder weitere substituierte Phenyl, wie z.B. Ethyl, Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar,

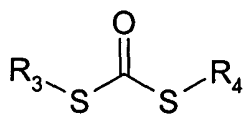

(IV)

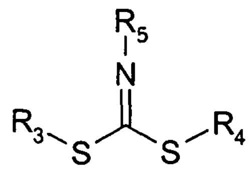

(V)

wobei $R_5$ ebenfalls unabhängig von $R_3$ und $R_4$ aus der oben aufgeführten Gruppe für diese Reste gewählt werden kann.

Beim konventionellen 'RAFT-Prozess' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösungsmittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (VI) oder (VII) eingesetzt:

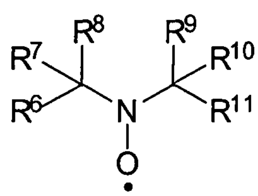

(VI)

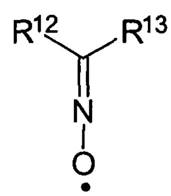

(VII)

wobei $R^6$, $R^7$, $R^8$, $R^9$, $R^{10}$, $R^{11}$, $R^{12}$, $R^{13}$ unabhängig voneinander folgende Verbindungen oder Atome bedeuten:

i) Halogenide, wie z. B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{14}$, Alkoxide $-OR^{15}$ und/oder Phosphonate $-PO(OR^{16})_2$,

wobei $R^{14}$, $R^{15}$ oder $R^{16}$ für Reste aus der Gruppe ii) stehen.

Verbindungen der (VI) oder (VII) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.

Mehr bevorzugt werden als kontrollierte Regler für die Polymerisation Verbindungen folgender Typen eingesetzt:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL

- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid.

Eine Reihe weiterer Polymerisationsmethoden, nach denen die Haftklebemassen in alternativer Vorgehensweise hergestellt werden können, lassen sich aus dem Stand der Technik wählen. Die US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft. Die WO 98/13392 A1 beschreibt offenkettige Alkoxyaminverbindungen, die ein symmetrisches Substitutionsmuster aufweisen. Die EP 735 052 A1 offenbart ein Verfahren zur Herstellung thermoplastischer Elastomere mit engen Molmassenverteilungen.

Die WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. Die WO 98/44008 A1 offenbart spezielle Nitroxyle, die auf Morpholinen, Piperazinonen und Piperazindionen basieren. Die DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

<u>Beschichtungsverfahren, Ausrüstung des Trägermaterials mit der Haftklebemasse</u>

Zur Herstellung von Haftklebemassen werden die oben beschriebenen Polymere bevorzugt als Hotmelt-Systeme (also aus der Schmelze) beschichtet. Für das Herstellungsverfahren kann es daher erforderlich sein, das Lösungsmittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösungsmittel oder Wasser wird bevorzugt über mehrere Vakuumstufen abdestilliert. Zudem wird je nach Destillationstemperatur des Lösungsmittels gegengeheizt. Die Restlösungsmittelanteile betragen bevorzugt < 1 %, mehr bevorzugt < 0,5 % und sehr bevorzugt < 0,2 %. Der Hotmelt wird aus der Schmelze weiterverarbeitet.

Weiterhin wird in einer sehr bevorzugten Auslegung der Kreidefüllstoff zu dem Acrylathotmelt in der Schmelze hinzugegeben. Zum homogenen Kompoundieren in die Schmelze wird bevorzugt ein Doppelschneckenextruder oder ein Planetwalzenextruder eingesetzt.

In dem bevorzugten Verfahren wird der Schmelzhaftkleber durch eine Extrusionsdüse beschichtet. Die verwendeten Extrusionsdüsen können vorteilhaft aus einer der folgenden Kategorien stammen: T-Düse, Fischschwanz-Düse und Bügel-Düse. Die einzelnen Typen unterscheiden sich durch die Gestalt ihres Fließkanals. Durch die Form der Extrusionsdüse kann ebenfalls die Orientierung innerhalb des Schmelzhaftklebers minimiert werden. Zur Beschichtung wird besonders bevorzugt mit einer Bügeldüse auf einen Träger beschichtet, und zwar derart, dass durch eine Relativbewegung von Düse zu Träger eine Polymerschicht auf dem Träger entsteht.

Die Zeitdauer zwischen der Beschichtung und der Vernetzung ist gering. In einer bevorzugten Vorgehensweise wird nach weniger als 60 Minuten vernetzt, in einer mehr bevorzugten Vorgehensweise nach weniger 3 Minuten, in einer äußerst bevorzugen Vorgehensweise im in-line Verfahren nach weniger als 10 Sekunden.

Bei dem mit dem erfinderischen Schmelzhaftkleber ausgerüsteten Trägermaterial kann es sich um ein einoder doppelseitiges Klebeband handeln.

In einer Ausführung werden Transfer-Tapes hergestellt. Als Trägermaterial eignen sich z.B. alle silikonisierten oder fluorierten Folien mit einer Releasewirkung. Als Folienmaterialien seien hier nur beispielhaft BOPP, MOPP, PET, PVC , PUR, PE/EVA, EPDM, PP und PE genannt. Weiterhin lassen sich für Transfertapes auch Trennpapiere (Glassine Papiere, Kraft Papiere, polyolefinisch beschichtete Papiere) einsetzen.

Zur optionalen UV-Vernetzung wird das Haftklebeband mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators, dem einzustellenden Vernetzungsgrad und dem Maß der Orientierung angepasst.

In einem sehr zu bevorzugenden Vernetzungsverfahren wird die Haftklebemasse mit Elektronenstrahlen vernetzt. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Standes der Technik und die wichtigsten verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Es können auch beide Vernetzungsverfahren angewendet werden oder andere Verfahren, die hochenergetische Bestrahlung ermöglichen.

Experimente

Die Erfindung wird nachfolgend durch Experimente beschrieben, ohne sich durch die Wahl der untersuchten Proben unnötig beschränken zu wollen.

Folgende Testmethoden wurden angewendet.

Messung des Rückschrumpfes (Test A)

Parallel zur Beschichtungsrichtung des Hotmelts wurden Streifen von mindestens 30 mm Breite und 20 cm Länge geschnitten. Bei Masseaufträgen bei 100 g/m$^2$ wurden je 3 Streifen übereinander laminiert. Der derart erhaltene Körper wurde dann auf exakt 20 mm Breite geschnitten und an den jeweiligen Enden in einem Abstand von 15 cm mit Papierstreifen überklebt. Der auf diese Weise präparierte Prüfkörper wurde dann bei Raumtemperatur vertikal aufgehängt und die Änderung der Länge über die Zeit verfolgt, bis keine weitere Schrumpfung der Probe mehr festgestellt werden konnte. Die um den Endwert reduzierte Ausgangslänge wurde dann bezogen auf die Ausganglänge als Rückschrumpf in Prozent angegeben.

Für die Messung der Orientierung nach längerer Zeit wurden die beschichteten und orientierten Haftklebemassen über einen längeren Zeitraum als Lappenmuster gelagert und anschließend analysiert. Unter orientierte Haftklebemassen wird die Tendenz verstanden, sich nach einer Streckung in eine vorgegebene Richtung durch das so genannte entropieelastische Verhalten in den Ausgangszustand zurückzubewegen.

Gelpermeationschromatographie GPC (Test B)

Die Bestimmung des mittleren Molekulargewichtes $M_w$ und der Polydisperisität PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, 10$^3$ Å, ID 8,0 mm x 50 mm verwendet. Zur Auftrennung wurden die Säulen PSS-SDV, 5 μ, 10$^3$ sowie 10$^5$ und 10$^6$ Å mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

180° Klebkrafttest (Test C)

Ein 20 mm breiter Streifen einer auf Polyester oder silikonisiertem Trennpapier gecoateten Acrylathaftklebemasse wurde auf Stahlplatten (Test C1) oder auf PE-Platten (Test C2) aufgebracht. Der Haftklebestreifen wurde zweimal mit einem 2 kg Gewicht auf das Substrat aufgedrückt. Das Klebeband wurde anschließend sofort mit 30 mm/min und im 180° Winkel vom Substrat abgezogen. Die Stahlplatten wurden zweimal mit Aceton und einmal mit Isopropanol gewaschen. Es wurden jeweils neue PE-Platten eingesetzt. Die Messergebnisse sind in N/cm angegeben und sind gemittelt aus drei Messungen. Alle Messungen wurden bei Raumtemperatur unter klimatisierten Bedingungen durchgeführt.

Scherfestigkeit (Test D)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm x 13 mm (Länge x Breite). Anschließend wurde mit 2 kg Anpressdruck das Klebeband viermal auf den Stahlträger gedrückt. Bei Raumtemperatur wurde mit einem 1 kg Gewicht belastet. Die gemessenen Scherstandzeiten sind in Minuten angegeben und entsprechen dem Mittelwert aus drei Messungen.

Herstellung der Proben

Polymer 1

Ein für radikalische Polymerisationen konventioneller 200 L-Reaktor wurde mit 26 kg Methylacrylat, 32 kg 2-Ethylhexylacrylat, 32 kg Butylacrylat und 53,3 kg Aceton/-Isopropanol (85:15) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurden wiederum 40 g AIBN hinzugegeben. Nach 5 h und 10 h wurde mit jeweils 15 kg Aceton/Isopropanol (85:15) verdünnt. Nach 6 und 8h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Die Bestimmung des Molekulargewichtes nach Test B ergab ein $M_W$ = 374.000 g/mol bei einer Polydispersität $M_W/M_n$ = 6,2.

Polymer 2

Ein für radikalische Polymerisationen konventioneller 200 L-Reaktor wurde mit 26 kg Isobornylacrylat, 32 kg 2-Ethylhexylacrylat, 32 kg Butylacrylat und 53,3 kg Aceton/-Isopropanol (85:15) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Siedegrenzenbenzin 60/95 (50:50) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Die Bestimmung des Molekulargewichtes nach Test B ergab ein $M_W$ = 394.000 g/mol bei einer Polydispersität $M_W/M_n$ = 6,5.

**Referenzbeispiel 1:**

Polymer 1 wurde mit 30 Gew.-% eines $C_5$-$C_9$ KW-Harzes der Firma VFT Rüttgers (TK 90 H) mit 5 Gew.-% eines Phthalsäureesters (Palatinol™ AH, Fa. BASF AG) und 1 Gew.-% trifunktionellen Acrylats (SR 444, Fa. Cray Valley) in Lösung abgemischt und anschließend in der Wärme bei 120 °C im Vakuum vom Lösungsmittel befreit.

**Referenzbeispiel 2:**

Polymer 2 wurde mit 30 Gew.-% eines $C_5$-$C_9$ KW-Harzes der Firma VFT Rüttgers (TK 90 H) mit 5 Gew.-% eines Phthalsäureesters (Palatinol™ AH, BASF AG) und 1 Gew.-% trifunktionellen Acrylats (SR 444, Fa. Cray Valley) in Lösung abgemischt und anschließend in der Wärme bei 120 °C im Vakuum vom Lösungsmittel befreit.

**Beispiel 3:**

Polymer 1 wurde mit 30 Gew.-% eines $C_5$-$C_9$ KW-Harzes der Firma VFT Rüttgers (TK 90 H), mit 30 Gew.-% Kreide (Mikrosöhl) mit 5 Gew.-% eines Phthalsäureesters (Palatinol™ AH, BASF AG) und 1 Gew.-% trifunktionellen Acrylats (SR 444, Fa. Cray Valley) in Lösung abgemischt und anschließend in der Wärme bei 120 °C im Vakuum vom Lösungsmittel befreit.

**Beispiel 4:**

Polymer 2 wurde mit 30 Gew.-% eines $C_5$-$C_9$ KW-Harzes der Firma VFT Rüttgers (TK 90 H), mit 30 Gew.-% Kreide (Mikrosöhl) mit 5 Gew.-% eines Phthalsäureesters (Palatinol™ AH, BASF AG) und 1 Gew.-% trifunktionellen Acrylats (SR 444, Fa. Cray Valley) in Lösung abgemischt und anschließend in der Wärme bei 120 °C im Vakuum vom

Lösungsmittel befreit.

i) Musterherstellung zur Bestimmung des Rückschrumpfes

Die Beispiele 1 bis 4 wurden durch eine Bügel-Extrusionsdüse mit einem Düsenspalt von 300 µm und einer Beschichtungsbreite von 33 cm bei 170 °C (Massetemperatur) mit einer Bahngeschwindigkeit von 10 m/min auf eine mit 1,5 g/m$^2$ Silikon-beschichtete (Polydimethylsiloxan) 12 µm PET-Folie beschichtet. Bei einem Masseauftrag von 100 g/m$^2$ (entsprechend einer ca. 100 µm dicken Haftklebeschicht) wurde ein Reckverhältnis von 3:1 eingestellt.

Die silikonisierte PET-Folie wurde über eine auf 60 °C aufgeheizte und mitrotierende Stahlwalze geführt. Im In-line Verfahren wurde dann nach einer Bahnstrecke von ca. 5 m das Haftklebeband mit Elektronenstrahlen vernetzt. Für die Elektronenbestrahlung erfolgte die Vernetzung mit einem Gerät der Fa. Electron Crosslinking AB, Halmstad, Schweden. Das beschichtete Haftklebeband wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min. Es wurde mit einer Beschleunigungsspannung von 180 kV und mit einer Dosis von 80 kGray durchstrahlt.

Zur Bestimmung des Rückschrumpfes wurde der Test A durchgeführt.

Resultate

In einer ersten Untersuchung wurde der Grad der Orientierung der einzelnen Haftklebemassen der Beispiele 1 bis 4 nach der Beschichtung ermittelt. Dafür wurde im Folgenden nach Testmethode A der Rückschrumpf im freien Film bestimmt. Die gemessenen Werte sind in Tabelle 1 zusammengefasst.

Tabelle 1.

| Übersicht ermittelte Rückschrumpfwerte im freien Film (Test A). | |
|---|---|
| **Beispiel** | **Rückschrumpf im freien Film (Test A)** |
| Referenzbeispiel 1 | 7 % |
| Referenzbeispiel 2 | 6 % |
| Beispiel 3 | 2 % |
| Bespiel 4 | 2 % |

Die Referenzbeispiele 1 und 2 in Tabelle 1 weisen ein ausgeprägteres Rückstellvermögen (Rückschrumpf) als die erfinderischen Beispiele 3 und 4 aus. Durch den Zusatz der Mikrosöl Kreide verringert sich das Rückstellvermögen deutlich.

In folgender Tabelle 2 wurden die klebtechnischen Daten für alle Beispiele1 bis 4 ermittelt. Es wurde analog den Testmethoden C und D vorgegangen.

Tabelle 2:

| Übersicht der ermittelten klebtechnischen Eigenschaften | | | |
|---|---|---|---|
| **Beispiel** | **Klebkraft auf Stahl (Test C1)** | **Klebkraft auf PE (Test C2)** | **Scherstandzeiten (Test D)** |
| Referenzbeispiel 1 | 11,2 N/cm | 4,0 N/cm | 1860 min. |
| Referenzbeispiel 2 | 12,5 N/cm | 3,2 N/cm | 3420 min. |
| Beispiel 3 | 11,4 N/cm | 4,1 N/cm | 2015 min. |
| Bespiel 4 | 12,4 N/cm | 3,4 N/cm | 3405 min. |
| Masseauftrag: 50 g/m$^2$ | | | |

Der Vergleich der Klebkräfte der Referenzbeispiele 1 bzw. 2 mit den erfinderischen Beispielen 3 bzw. 4 zeigt, dass bei den vergleichbaren Paarungen nahezu die identischen klebtechnischen Eigenschaften gemessen wurden. Die Unterschiede liegen im Rahmen der Messungenauigkeit der Testmethode.

Durch den Zusatz der Kreide und den Verzicht von Carbonsäure- oder Hdroxygruppenhaltige Comonomere konnte somit das Rückschrumpfvermögen als auch die klebtechnischen Eigenschaften beibehalten werden. Weiterhin

werden durch den Füllstoff Kreide auch die Herstellkosten des Acrylatschmelzhaftklebers deutlich herabgesetzt.

**Patentansprüche**

1. Schmelzhaftkleber, umfassend mindestens eine Polyacrylatkomponente und einen Calciumcarbonat-haltigen Füllstoffzusatz, wobei die mindestens eine Polyacrylatkomponente

   - zumindest zu einem Massenanteil von 50 % auf mindestens einem Acrylsäureester und/oder Methacrylsäureester der allgemeinen Formel (I) basiert,

   $$CH_2 = CH(R_1)(COOR_2) \qquad (I)$$

     wobei $R_1$ gleich H oder $CH_3$ ist und $R_2$ ein unverzweigter, verzweigter oder zyklischer $C_1$- bis $C_{22}$-Alkylrest ist, und
   - im Wesentlichen frei von polaren Gruppen ist.

2. Schmelzhaftkleber nach Anspruch 1, **dadurch gekennzeichnet, dass** die mindestens eine Polyacrylatkomponente eine mittlere Molmasse $M_W$ von höchstens 500.000 g/mol, insbesondere von höchstens 450.000 g/mol, speziell von höchstens 400.000 g/mol, aufweist.

3. Schmelzhaftkleber nach Anspruch 1 oder 2, **dadurch gekennzeichnet, dass** der Calciumcarbonat-haltige Füllstoffzusatz Kreide ist.

4. Schmelzhaftkleber nach einem der vorhergehenden Ansprüche, **dadurch gekennzeichnet, dass** der Calciumcarbonat-haltige Füllstoffzusatz einen auf die Polyacrylatkomponente bezogenen Massenanteil von mindestens 10 %, insbesondere von mindestens 15 %, aufweist.

5. Schmelzhaftkleber nach einem der vorhergehenden Ansprüche, **dadurch gekennzeichnet, dass** der Schmelzhaftkleber einen Rückschrumpf nach Extrusionsbeschichtung von höchstens 5 %, insbesondere von höchstens 4 %, speziell von höchstens 3 %, aufweist.

6. Schmelzhaftkleber nach einem der vorhergehenden Ansprüche, **dadurch gekennzeichnet, dass** die mindestens eine Polyacrylatkomponente im Wesentlichen frei von Carbonsäure- oder Hydroxygruppen ist.

7. Schmelzhaftkleber nach einem der vorhergehenden Ansprüche, **dadurch gekennzeichnet, dass** die Gruppe $R_2$ der allgemeinen Formel (I) aus der Gruppe der unverzweigten, verzweigter oder zyklischen $C_4$- bis $C_{14}$-Alkylresten, insbesondere $C_4$bis $C_9$-Alkylresten, gewählt ist.

8. Schmelzhaftkleber nach einem der vorhergehenden Ansprüche, **dadurch gekennzeichnet, dass** die Gruppe $R_2$ der allgemeinen Formel (I) aus der Gruppe der überbrückten oder nicht-überbrückten, alkylierten oder nicht-alkylierten Cycloalkylresten mit mindestens 6 C-Atomen gewählt ist.

9. Schmelzhaftkleber nach einem der Ansprüche 7 oder 8, **dadurch gekennzeichnet, dass** der mindestens eine Acrylsäureester und/oder Methacrylsäureester der allgemeinen Formel (I) aus der folgenden Gruppe ausgewählt ist, umfassend Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, Isobutylacrylat, 2-Ethylhexylacrylat, 2-Ethylhexylmethacrylat, Isooctylacrylat, Isooctylmethacrylat, Cyclohexylmethacrylat, Isobornylacrylat, Isobomylmethacrylat, und 3,5-Dimethyladamantylacrylat.

10. Schmelzhaftkleber nach einem der vorhergehenden Ansprüche, **dadurch gekennzeichnet, dass** die mindestens eine Polyacrylatkomponente neben dem mindestens einem Acrylsäureester und/oder Methacrylsäureester auf mindestens einem Comonomer basiert.

11. Schmelzhaftkleber nach Anspruch 10, **dadurch gekennzeichnet, dass** das mindestens eine Comonomer eine Verbindung ist, ausgewählt aus der Gruppe der N-alkylsubstituierten Amide, insbesondere aus der Gruppe, enthaltend N,N-Dimethylacrylamid, N,N-Dimethylmethacrylamid, N-tert-Butylacrylamid, N-Vinylpyrrolidon, N-Vinyllactam, Dimethylaminoethylacrylat, Dimethylaminoethylmethacrylat, Diethylaminoethylacrylat Diethylaminoethylmethacrylat, N-(Butoxymethyl)methacrylamid, N-(Ethoxymethyl)acrylamid, N-Isopropylacrylamid.

**12.** Schmelzhaftkleber nach einem der Ansprüche 10 oder 11, **dadurch gekennzeichnet, dass** das mindestens eine Comonomer eine Verbindung ist, ausgewählt aus der Gruppe, enthaltend Maleinsäureanhydrid, Itaconsäureanhydrid, Glyceridylmethacrylat, Phenoxyethylacrylat, Phenoxyethylmethacrylat, 2-Butoxyethylacrylat, 2-Butoxyethylmethacrylat, Cyanoethylacrylat, Cyanoethylmethacrylat, Glycerylmethacrylat und Tetrahydrofurfurylacrylat.

**13.** Schmelzhaftkleber nach Anspruch 10 oder 11, **dadurch gekennzeichnet, dass** das mindestens eine Comonomer eine Verbindung ist, ausgewählt aus der Gruppe, enthaltend Vinylester, Vinylether, Vinylhalogenide, Vinylidenhalogenide, Vinylverbindungen mit aromatischen Cyclen oder Heterocyclen in $\alpha$-Stellung, insbesondere enthaltend Vinylacetat, Vinylformamid, Vinylpyridin, Ethylvinylether, Vinylchlorid, Vinylidenchlorid und Acrylonitril.

**14.** Schmelzhaftkleber nach Anspruch 10 oder 11, **dadurch gekennzeichnet, dass** das mindestens eine Comonomer ein Photoinitiator mit einer copolymerisierbaren Doppelbindung ist, insbesondere Norrish-I- oder Norrish-II-Photoinitiatoren, Benzoinacrylate oder acrylierte Benzophenone.

**15.** Schmelzhaftkleber nach einem der vorhergehenden Ansprüche 10 bis 14, **dadurch gekennzeichnet, dass** dem mindestens einen Comonomer mindestens eine weitere Komponente mit einer hohen statischen Glasübergangstemperatur zugesetzt ist, insbesondere eine aromatische Vinylverbindung, vorzugsweise ein $C_4$- bis $C_{18}$-Aromat oder -Heteroaromat.

**16.** Schmelzhaftkleber nach einem der vorhergehenden Ansprüche, **dadurch gekennzeichnet, dass** dem Schmelzhaftkleber mindestens eine Harz-Komponente zugemengt ist, insbesondere der Gruppe, enthaltend Pinen-, Inden- und Kolophoniumharze, oder deren Derivate oder Salze; aliphatische, aromatische oder alkylaromatische Kohlenwasserstoffharze, insbesondere $C_5$- bis $C_9$-Kohlenwasserstoffharze; hydrierte Kohlenwasserstoffharze; substituierte oder nicht-substituierte Kohlenwasserstoffharze; Naturharze; Terpenharze und Terpenphenolharze.

**17.** Schmelzhaftkleber nach einem der vorhergehenden Ansprüche, **dadurch gekennzeichnet, dass** dem Schmelzhaftkleber weitere Zusätze, insbesondere Weichmacher, Keimbildner, Blähmittel, Compoundierungsmittel, Alterungsschutzmittel, Vemetzer und/oder Promotoren, zugesetzt sind.

**18.** Verfahren zur Herstellung eines Schmelzhaftklebers nach einem der Ansprüche 1 bis 17, wobei

(a) durch zumindest teilweise Polymerisation mindestens eines Acrylsäureesters und/oder Methacrylsäureesters der allgemeinen Formel (I),

$$CH_2 = CH(R_1)(COOR_2) \qquad (I)$$

wobei $R_1$ gleich H oder $CH_3$ ist und $R_2$ ein unverzweigter, verzweigter oder zyklischer $C_1$- bis $C_{22}$-Alkylrest ist, gegebenenfalls in Gegenwart mindestens eines Comonomers, mindestens eine Polyacrylatkomponente hergestellt wird und
(b) vor oder nach der Polymerisation ein Calciumcarbonat-haltiger Füllstoff zugemengt wird.

**19.** Verfahren nach Anspruch 18, **dadurch gekennzeichnet, dass** die Polymerisation in Lösung oder in Substanz durchgeführt wird.

**20.** Verfahren nach Anspruch 18 oder 19, **dadurch gekennzeichnet, dass** die Polymerisation in Gegenwart mindestens eines Kontrollreagenzes der allgemeinen Formel (II), (III), (IV) und/oder (V) durchgeführt wird,

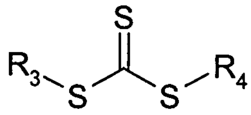

(II)

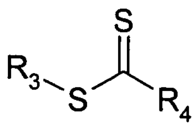

(III)

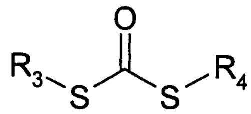

(IV)

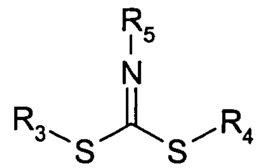

(V)

worin $R_3$, $R_4$ und $R_5$ unabhängig voneinander oder gleich gewählt sind aus

- verzweigten oder unverzweigten $C_1$- bis $C_{18}$-Alkylresten; $C_3$- bis $C_{18}$-Alkenylresten; oder $C_3$- bis $C_{18}$-Alkinylresten;
- $C_1$- bis $C_{18}$-Alkoxyresten;
- durch zumindest eine OH-Gruppe oder ein Halogenatom oder einen Silylether substituierte $C_1$- bis $C_{18}$-Alkylresten; $C_3$- bis $C_{18}$-Alkenylresten; $C_3$- bis $C_{18}$-Alkinylresten;
- $C_2$-$C_{18}$-Hetero-Alkylresten mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierten $C_1$-$C_{18}$-Alkylresten, $C_3$-$C_{18}$-Alkenylresten oder $C_3$-$C_{18}$-Alkinylresten;
- $C_3$-$C_{12}$-Cycloalkylresten;
- $C_6$-$C_{18}$- Aryl- oder Benzylresten; oder
- Wasserstoff.

**21.** Verfahren nach Anspruch 18 oder 19, **dadurch gekennzeichnet, dass** die Polymerisation in Gegenwart mindestens eines Kontrollreagenzes der allgemeinen Formel (VI) und/oder (VII) durchgeführt wird,

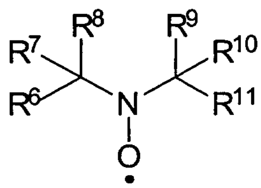

(VI)

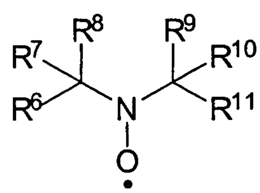

(VII)

wobei $R_6$, $R_7$, $R_8$, $R_9$, $R_{10}$, $R_{11}$, $R_{12}$, $R_{13}$ unabhängig voneinander folgende Verbindungen oder Atome bedeuten:

(i) Halogenide, wie z.B. Chlor, Brom oder Iod
(ii) lineare, verzweigte, cyclische und heterocyclische $C_1$- bis $C_{20}$-Kohlenwasserstoffe, die gesättigt, ungesättigt oder aromatisch sein können,
(iii) Ester $-COOR_{14}$, Alkoxide $-OR_{15}$ und/oder Phosphonate $-PO(OR_{16})_2$,

wobei $R_{14}$, $R_{15}$ oder $R_{16}$ für Reste aus der Gruppe (ii) stehen.

**22.** Verwendung eines Schmelzhaftklebers nach einem der Ansprüche 1 bis 17 zur Herstellung eines Haftklebebands, umfassend ein mit einem Flammschutzmittel imprägniertes Trägermaterial, das einseitig oder doppelseitig mit dem Schmelzhaftkleber beschichtet ist.

**23.** Verwendung nach Anspruch 22, **dadurch gekennzeichnet, dass** als Trägermaterial ein Vlies, insbesondere ein PET-Vlies, oder ein Gewebevlies, oder ein Gewebe verwendet wird.

**24.** Verwendung nach Anspruch 22 oder 23, **dadurch gekennzeichnet, dass** das Trägermaterial mit dem Schmelzhaftkleber als Schmelze im Hotmelt-Verfahren beschichtet wird, insbesondere durch Walzenbeschichtung, in einem Schmelzdüsenverfahren oder durch Extrusionsbeschichtung.

**25.** Verwendung nach einem der Ansprüche 22 bis 24, **dadurch gekennzeichnet, dass** der Schmelzhaftkleber nach der Beschichtung des Trägermaterials vernetzt wird, insbesondere mit UV-Strahlung und/oder mit Elektronenstrahlen und/oder durch andere hochenergetische Bestrahlung.